Europäisches Patentamt

(19) European Patent Office

Office européen des brevets

(11) Veröffentlichungsnummer: **0 218 162**
A2

(12) **EUROPÄISCHE PATENTANMELDUNG**

(21) Anmeldenummer: **86113313.0**

(22) Anmeldetag: **26.09.86**

(51) Int. Cl.⁴: **A 01 K 51/00**

(30) Priorität: **07.10.85 DE 3535734**

(71) Anmelder: **Finkbeiner, Friedrich, Augarten 25, D-7240 Horb-Dettingen (DE)**

(43) Veröffentlichungstag der Anmeldung: **15.04.87 Patentblatt 87/16**

(84) Benannte Vertragsstaaten: **AT CH DE FR LI**

(72) Erfinder: **Finkbeiner, Friedrich, Augarten 25, D-7240 Horb-Dettingen (DE)**

(54) **Ameisensäureverdunster zur Bekämpfung der Bienenseuche Varroatose.**

(57) Zur Bekämpfung der Varroatose wird aus einem luftdicht verschlossenen, in der Wabe befestigten Flüssigkeitsbehälter mittels eines Dochtes aus gepreßtem Zellstoff selbständig Ameisensäure zeitlich und in der Dosierung kontrolliert in der Bienenbeute verdunstet, wobei durch eine konstant minimalisierte Ameisensäuredunstkonzentration von etwa 1 ml 85%iger Ameisensäure pro 24 Stunden und pro Bienenbeute während eines Zeitraumes von mindestens 30 Tagen die Varroa-Milben praktisch rückstandsfrei zum Absterben gebracht werden.

Die durch Herausziehen oder Zurückschieben größenverstellbare Verdunstungsfläche des Dochtes ermöglicht eine variable Ameisensäuredunstkonzentration. Die abnehmbare Gitterhaube hält dabei die Bienen von der Verdunstungsfläche fern und gewährt den Zugriff auf die Einfüllöffnung, ohne daß auf den luftdichten Verschluß eingewirkt, bzw. die Dochtstellung beeinträchtigt wird.

0218162

Beschreibung:

<u>Ameisensäureverdunster zur Bekämpfung der Bienen-
seuche Varroatose</u>

Die Erfindung betrifft ein Ameisensäureverdunstungsgerät,
bei dem aus einem luftdicht verschlossenen Flüssigkeitsbehälter mittels eines von einer Gitterhaube umgebenen Dochtes
in einer Bienenbeute selbständig eine bestimmte variierbare
Menge von Ameisensäure einer bestimmten Konzentration zum
Zwecke der Varroatose-Bekämpfung zeitlich und in der Dosierung kontrolliert verdunstet. Durch die gleichmäßige und
in der Dosierung minimalisierte Ameisensäuredunstkonzentration von etwa 1 ml 85%iger Ameisensäure pro 24 Stunden und
pro Bienenbeute während eines Zeitraums von mindestens 30
Tagen werden bei einfachster Handhabung durch den Imker
einerseits die Bienenvölker vom Befall der parasitären
Varroa-Milben befreit und andererseits weder die Bienenvölker geschädigt, noch die Genießbarkeit des Honigs beeinträchtigt.
Durch die Erfindung wird die neue Erkenntnis technisch umgesetzt, daß eine mindestens 30 Tage konstant bleibende, minimale Ameisensäuredunstkonzentration in der Bienenbeute bei
der Varroatose-Bekämpfung wirksamer und für die Bienen schonender ist, als eine kurzfristige, hochkonzentrierte Ameisensäureverdunstung.

Die bisher bekannte und zur Varroatose-Bekämpfung hauptsächlich angewandte hochkonzentrierte Ameisensäureverdunstung in der Bienenbeute durch unkontrollierte, in hoher Konzentration beginnende und ständig abnehmende Ameisensäureverdunstung mittels ameisensäuregetränkter Platten
(z.B. Illertisser-Milbenplatte, vgl. Zeitschrift "Das Bienenmütterchen", Heft 12/1985, Seite 222/223; Heft 4/1985,
Seite 68; Zeitschrift "Bienenpflege", Heft 2/1986, Seite 39
oben) führt zu unerwünscht hohen Ameisensäurerückständen in
Wachs und Honig und zu Schädigungen der Bienen, und ist daneben nicht ganzjährig, sondern nur im Herbst anwendbar.

Auch die chemische Behandlung der Bienenvölker (z.B. durch Perizin) hinterläßt gesundheitsschädliche Rückstände in Honig und Wachs und ist deshalb mindestens mehrere Wochen vor der Tracht nicht mehr anwendbar. Honig mit entsprechenden Wachspartikeln ist zum Verzehr ungeeignet (vgl. Zeitschrift "Bienenpflege", Heft 3/1986, Seite 69).

Bekannt ist auch die unter künstlicher Erwärmung der gesamten Bienenbeute erfolgende Verdunstung eines offenen Ameisensäurevorrats mittels eines in einen offenen Flaschenhals getauchten Dochtes (vgl. Deutsches Patent, Az.: P 33 08 017, bzw. DE 3308017 C1 vom 07.03.1983). Der Nachteil jenes Verfahrens liegt in seiner technischen Aufwendigkeit, der Notwendigkeit der Zuführung häufig nicht vorhandener elektrischer Energie in jede einzelne Bienenbeute, sowie darin, daß die natürlichen Termperaturverhältnisse in der Bienenbeute gestört werden.

All diese unerwünschten Nebenwirkungen und Hindernisse werden durch die Erfindung überwunden, indem eine zeitlich unbegrenzt mögliche, experimentell als noch wirksam herausgefundene und wegen der Vermeidung von Rückständen, sowie zugunsten der Bienenakzeptanz minimale aber variierbare Ameisensäuredunstkonzentration in der Bienenbeute in einfachster, schonendster und praktikabelster Weise konstant aufrechterhalten wird.

Der Erfindung liegt dabei die Aufgabe zugrunde, in einer Bienenbeute eine vergleichbare Ameisensäuredunstkonzentration zu erzeugen und aufrechtzuerhalten, wie sie sonst der von Ameisen selbst in einer Bienenbeute erzeugten entspricht, um so die Varroa-Milben praktisch rückstandsfrei und auf nahezu natürliche Weise zum Absterben zu bringen. Dieser Aufgabe liegt die durch Beobachtungen gewonnene Erkenntnis zugrunde, daß die durch Ameisen heimgesuchten Bienenvölker aufgrund des durch die Ameisen in der Bienenbeute erzeugten Ameisensäuredunstes innerhalb von drei bis vier Wochen nahezu varroafrei sind.

Die tägliche Dosis (24 Stunden, Ameisen sind auch nachtaktiv) 100%iger Ameisensäure, die die Ameisen bei zwei Magazinen versprühen, wurde mit etwa 0,5 bis 0,6 ml ermittelt. Mit dem zum Patent angemeldeten Gegenstand können die von der Natur vorgegebenen Werte beliebig lange nachvollzogen oder aufgrund der größenverstellbaren Verdunstungsfläche variiert werden, da bei gewöhnlichen Temperaturverhältnissen und bei einer Dochtverdunstungsfläche des verwendeten Materials (gepreßter Zellstoff) von 80 bis 90 qmm in 24 Stunden ziemlich genau 0,8 bis 0,85 ml 85%iger Ameisensäure verdunstet.

Die von den Bienen in der Bienenbeute selbst erzeugte Wärme dient dabei als verdunstungsfördernde Energiequelle.

Die vorgegebene Aufgabe wird erfindungsgemäß dadurch gelöst, daß auch während der Vegetations- und Trachtzeit aus einem luftdicht verschlossenen, in der Wabe befestigten Flüssigkeitsbehälter mittels eines Dochtes aus gepreßtem Zellstoff eine bestimmte, konstant gehaltene Menge Ameisensäure zeitlich und in der Dosierung kontrolliert in der Bienenbeute ohne Erwärmung der Umgebung verdunstet, wobei durch eine konstant minimalisierte Ameisensäuredunstkonzentration von etwa 1 ml 85%iger Ameisensäure pro 24 Stunden und pro Bienenbeute während eines Zeitraums von mindestens 30 Tagen einerseits das Bienenvolk nicht beeinträchtigt wird und andererseits die parasitären Milben praktisch rückstandsfrei und auf nahezu natürliche Weise zum Absterben gebracht werden.

Um die Bienen von der Verdunstungsfläche des Dochtes fernzuhalten und um dennoch Zugriff auf die größenverstellbare Verdunstungsfläche zum Zwecke der Verdunstungsregulierung zu haben, ist nach einer weiteren Ausbildung der Erfindung das Verdunstungsgerät mit einer abnehmbaren Gitterhaube zu versehen.

Die größenverstellbare Fläche des Dochtes dient dabei der Regulierung der Verdunstungsmenge, während die Einfüllöffnung am Flüssigkeitsbehälter das Nach- und Einfüllen ermöglicht, ohne daß der luftdichte Verschluß, bzw. die Dochteinstellung beeinträchtigt wird.

Neben den bereits genannten Vorteilen liegt die Originalität der Erfindung in der überlegenen Wirkungsweise bei bisher geringster Eingriffsintensität und niedrigster Nebenwirkung, sowie bisher einfachster Handhabung.

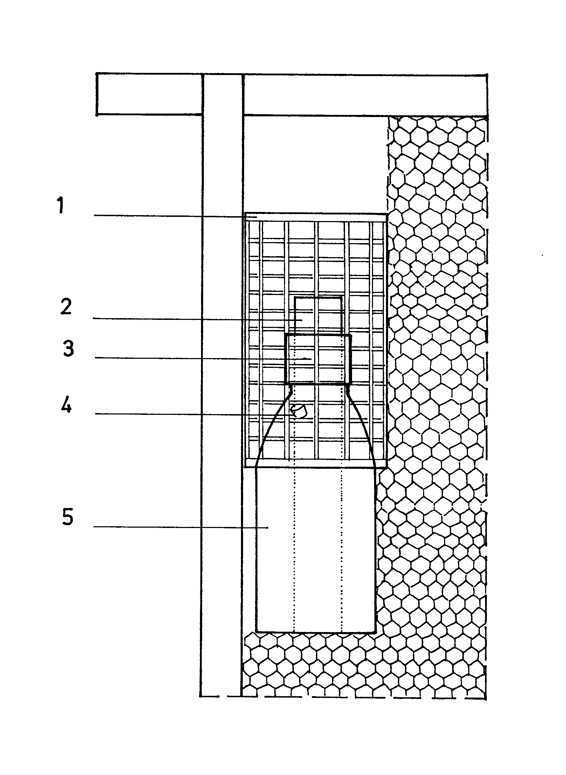

Ein Ausführungsbeispiel der Erfindung ist in der Zeichnung dargestellt und wird im folgenden näher beschrieben.
Es zeigt
(1) die abnehmbare, über das Verdunstungsgerät gestülpte Gitterhaube
(2) den flüssigkeitssaugenden und flüssigkeitsverdunstenden Docht als Verdunstungsfläche
(3) den luftdichten Verschluß zwischen Verdunstungsfläche und Flüssigkeitsbehälter
(4) die verschließbare Einfüllöffnung
(5) den säurebeständigen Flüssigkeitsbehälter

Die im Flüssigkeitsbehälter (5) befindliche Ameisensäure steigt durch den in die Ameisensäure hineinragenden Docht bis zur Verdunstungsfläche (2) nach oben und verdunstet dort mengenmäßig kontrolliert je nach gewünschter Größe der Verdunstungsfläche (2). Der luftdichte Verschluß (3) zwischen Verdunstungsfläche (2) und dem Flüssigkeitsbehälter (5) stellt dabei sicher, daß die Verdunstung ausschließlich über die Verdunstungsfläche (2) erfolgt. Die Größe der Verdunstungsfläche (2) ist durch herausziehen, bzw. zurückschieben des Dochtes in den Flüssigkeitsbehälter (5) variabel. Die Gitterhaube (1) hält die Bienen von der Verdunstungsfläche (2) fern und ermöglicht durch ihre Abnehmbarkeit den Zugriff auf den Docht, sowie auf die Einfüllöffnung (4) zum Nach- und Einfüllen von Ameisensäure in den Flüssigkeitsbehälter (5).

Patentansprüche

1. Ameisensäureverdunster zur Bekämpfung der Bienenseuche
   Varroatose
   Der Ameisensäureverdunster ist dadurch gekennzeichnet, daß
   aus einem luftdicht verschlossenen, in der Wabe befestigten
   Flüssigkeitsbehälter mittels eines Dochtes aus gepreßtem
   Zellstoff eine bestimmte, konstant gehaltene Menge Ameisensäure zeitlich und in der Dosierung kontrolliert in der Bienenbeute verdunstet, wobei durch die konstant minimalisierte
   Ameisensäuredunstkonzentration von etwa 1 ml 85%iger Ameisensäure pro 24 Stunden und pro Bienenbeute während eines
   Zeitraumes von mindestens 30 Tagen die parasitären Varroa-
   Milben praktisch rückstandsfrei zum Absterben gebracht werden.

2. Abnehmbare Gitterhaube nach Anspruch 1,
   dadurch gekennzeichnet, daß durch die abnehmbare Gitterhaube die Bienen von der Verdunstungsfläche ferngehalten
   werden und durch die Abnehmbarkeit des Gitters Zugriff auf
   die Verdunstungsfläche besteht und diese so vergrößert oder
   verkleinert werden kann.

3. Größenverstellbare Verdunstungsfläche des Dochtes nach Anspruch 1,
   dadurch gekennzeichnet, daß durch Herausziehen, bzw. Zurückschieben des Dochtes in den Flüssigkeitsbehälter die Größe
   der Verdunstungsfläche variabel ist.

4. Einfüllöffnung am Flüssigkeitsbehälter nach Anspruch 1,
   dadurch gekennzeichnet, daß ohne Einwirkung auf den Docht
   oder den luftdichten Verschluß zwischen Behälter und Verdunstungsfläche, Flüssigkeit nach- oder eingefüllt werden
   kann.

0218162

1/1